# EUROPEAN PATENT APPLICATION

(11) **EP 4 546 142 A2**
(43) Date of publication of application: **30.04.2025**
(21) Application number: 25164368.0
(22) Date of filing: 19.08.2023
(51) Int. Cl.: G06F 11/34

(54) **DEDICATED TELEMETRY SUBSYSTEM FOR TELEMETRY DATA**

(30) Priority: 01.03.2023 US 202318116042
(62) Divisional of application: 23192292.3
(71) Applicant: Google LLC, Mountain View, CA 94043 (US)
(72) Inventor: GAL-ON, Shay, Mountain View, 94043 (US); ISACHAR, Ori, 6789141 Tel Aviv (IL); LEE, Victor W., Mountain View, 94043 (US); ERANIAN, Stephane, Mountain View, 94043 (US); KODAKARA, Sreekumar Vadakke, Mountain View, 94043 (US); JIANG, Yunlian, Mountain View, 94043 (US); COSTI, Guy, Shoam (IL)
(74) Representative: Betten & Resch

(57) **Abstract**

Generally disclosed herein is an approach for a telemetry subsystem enabling the telemetry data to be collected and processed without the need to interrupt processing jobs being processed by processing cores. The telemetry subsystem may include one or more telemetry cores dedicated to telemetry data collection. Telemetry cores are configured to receive telemetry data from telemetry agents, processing cores, and other components of a system on chip (SoC).

## Description

### BACKGROUND

Telemetry data collected from a system on a chip (SoC) may be analyzed to assist with scheduling workloads to avoid antagonistic workloads, guide performance optimization efforts, and improve future hardware generations. In typical systems, telemetry data is collected by processing cores. Each time the telemetry data is collected, the processing jobs assigned to each processing core may be interrupted so that the processing cores can handle telemetry data collection and in some instances, processing. Such interruptions may delay the processing of the jobs.

### BRIEF SUMMARY

The present disclosure provides for a telemetry subsystem enabling the telemetry data to be collected and, in some instances, processed without the need to interrupt processing jobs being processed by processing cores. The telemetry subsystem may include telemetry cores, telemetry agents, and telemetry memory. The telemetry subsystem may collect telemetry data from the processing cores of the SoC. The telemetry subsystem may also collect telemetry data from other components of the SoC. The collected telemetry data may be analyzed for anomalies. The collected telemetry data may also be aggregated in histograms using histogram accelerators for post-processing.

An aspect of the disclosure provides for a system on a chip (SoC) for telemetry collection. The SoC comprises one or more processing cores and a telemetry subsystem comprising one or more telemetry cores. The one or more telemetry cores are configured to process telemetry data generated by one or more telemetry sources.

In another example, the telemetry subsystem includes a telemetry core random access memory (RAM), wherein the one or more telemetry cores are configured to store the telemetry data in the telemetry core RAM.

In yet another example, the telemetry core is connected to the one or more processing cores via a bus.

In yet another example, the SoC also comprise one or more additional components, wherein the one or more additional components provide the core or non-core telemetry data.

In yet another example, the telemetry subsystem further comprises one or more telemetry agents, wherein the one or more telemetry agents are attached to components of the SoC to monitor the components of the SoC for the telemetry data.

In yet another example, the telemetry subsystem comprises one or more histogram accelerator, wherein the one or more histogram accelerator processes the core telemetry data and the non-core telemetry data.

In yet another example, the telemetry data is stored in the memory.

Another aspect of the disclosure provides for a method for telemetry collection. The method includes collecting, by one or more the telemetry agents, telemetry data from one or more device components. The method also includes aggregating, by one or more telemetry cores, the collected telemetry data into a histogram. The method further includes storing, by the one or more telemetry cores, the aggregated telemetry data in memory. The method also includes analyzing, by the one or more processors, the aggregated telemetry data to determine operational changes for the device components.

In another example, the collected telemetry data is stored in a telemetry core random access memory (RAM),

In yet another example, the method further includes configuring one or more telemetry agents to connect to one or more device components for monitoring and collecting telemetry data.

The above and other aspects of the disclosure can include one or more of the following features. In some examples, aspects of the disclosure provide for all of the following features in combination.

In yet another example, the telemetry core is connected to the one or more processing cores via a bus.

In yet another example, the telemetry data includes core telemetry data and non-core telemetry data.

In yet another example, the telemetry subsystem comprises one or more analysis modules, wherein the telemetry cores configure the one or more analysis modules to generate histograms based on the telemetry data, post-process the generated histograms and detect anomalies from the post-processed histograms.

In yet another example, a first histogram accelerator of the one or more histogram accelerators processes the core telemetry data and a second histogram accelerator of the one or more histogram accelerators processes the non-core telemetry data.

In yet another example, the first histogram accelerator is configured to group the core telemetry data into bins according to part identifiers and event identifiers within the core telemetry data.

In yet another example, the second histogram accelerator is configured to group the non-core telemetry data into bins according to part identifiers and event identifiers within the non-core telemetry data.

### BRIEF DESCRIPTION OF THE DRAWINGS

FIG. 1 depicts a block diagram of an SoC with an integrated telemetry subsystem according to aspects of the disclosure.
FIG. 2 depicts a block diagram of an example interconnection system between components of an SoC according to aspects of the disclosure.
FIG. 3 depicts a block diagram of an architecture of a telemetry subsystem implemented by one or more telemetry cores according to aspects of the disclosure.
FIG. 4 depicts a block diagram of an example analysis module using histogram accelerators according to aspects of the disclosure.
FIG. 5 depicts a flow diagram illustrating a method for processing telemetry data using a telemetry subsystem according to aspects of the disclosure.
FIG. 6 depicts a flow diagram illustrating a method for generating and changing a histogram according to aspects of the disclosure.

### DETAILED DESCRIPTION

Generally disclosed herein is an approach for a telemetry subsystem enabling telemetry data to be collected and processed without the need to interrupt processing jobs being processed by processing cores. The telemetry subsystem may include one or more telemetry cores dedicated to telemetry data collection. Telemetry cores are configured to receive telemetry data from telemetry agents, processing cores, and other components of a system on chip (SoC).

The technology generally relates to a telemetry subsystem for a system on a chip (SoC). The telemetry subsystem may collect, process, and report telemetry data. The telemetry subsystem may include one or more telemetry cores and telemetry agents. The telemetry cores may be dedicated to telemetry data collection and processing. The telemetry agents may monitor and collect telemetry data from processing cores and other components of the SoC. The collected telemetry data may be provided by the telemetry agents to the telemetry cores. In this regard, telemetry cores are configured to receive telemetry data from telemetry agents.

Telemetry data may include data generated by components of an SoC. In this regard, the telemetry data may comprise core telemetry data and non-core telemetry data. The core telemetry data may be telemetry data generated by, or otherwise obtained from, the processing cores on the SoC. For example, core telemetry data may include data associated with the activity and performance of processing cores or components of the processing cores, such as how often certain activities are triggered, how long those activities are processed, frequencies of malfunctions, common metrics such as instruction per cycle (IPC), branch misprediction per 1000 instructions (MPKI), cache MPKI, etc.

Non-core telemetry data may include information related to memory utilization and I/O load, bandwidth and latency information, frequency of reliability events, power states, etc., of the components other than the processing cores. For example, non-core telemetry data may comprise telemetry data generated by or otherwise obtained from, components other than the processing cores, such as interconnects, common cache hierarchies, die-to-die interfaces, memory controllers, I/O interfaces, current monitors, voltage regulators, aging monitors, temperature sensors, etc.

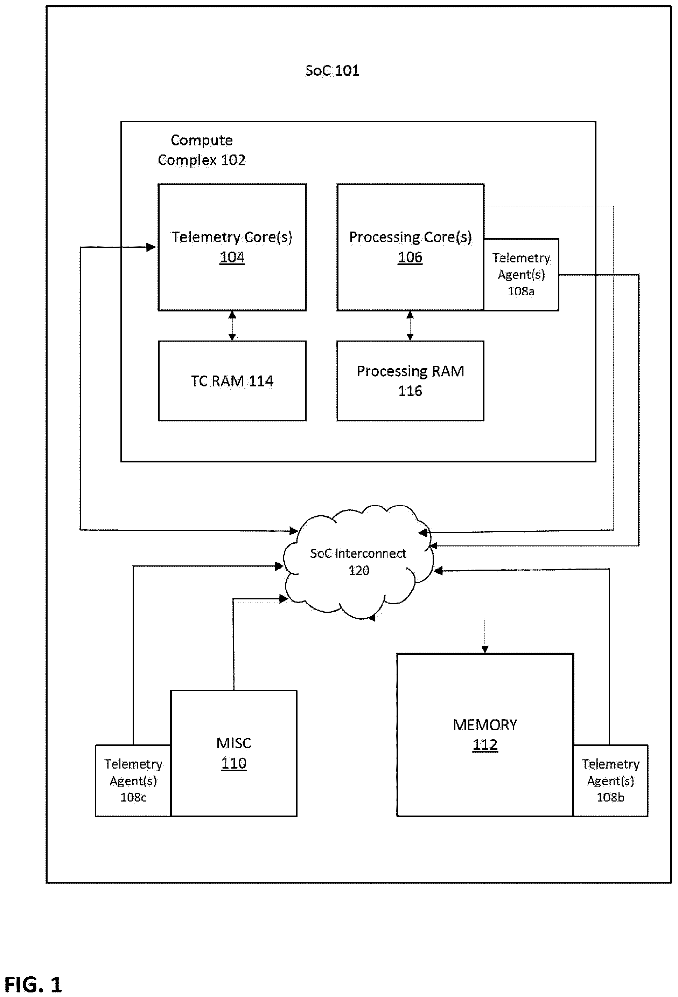

FIG. 1 illustrates a system on a chip (SoC) with an integrated telemetry subsystem. As shown, SoC 101 may include compute complex 102, memory 112, and miscellaneous components (MISC) 110. As described above, MISC 110 may include components such as interconnects, common cache hierarchies, die-to-die interfaces, memory controllers, I/O interfaces, current monitors, voltage regulators, aging monitors, temperature sensors, and other such components that may be found on or within a typical SoC. As further illustrated, compute complex 102 may include one or more telemetry cores 104, one or more processing cores 106, telemetry core (TC) random access memory (RAM) 114, and processing RAM (which may be implemented, for example, as L1 cache) 116.

Telemetry agents may be attached to each processing core 106, MISC 110, and memory 112. In this regard, and as further illustrated in Fig. 1, telemetry agents 108(a) may be connected to processing cores 106, telemetry agents 108(b) may be connected to memory 112, and telemetry agents 108(c) may be connected to MISC. The telemetry subsystem may include telemetry core(s) 104 and TC RAM 114, as well as telemetry agents 108a-c. It is to be understood that the telemetry subsystem may include any number of telemetry cores, TC RAMs, and telemetry agents. In some examples, each processing core 106 may have its own telemetry agent. In other examples, a telemetry agent may be shared by one or more processing cores. Likewise, each MISC or memory may have its own telemetry agent or share a telemetry agent with other MISCs or memory. TC RAM may be used to store telemetry data collected by telemetry cores. Each TC RAM may be connected to a telemetry core or shared by one or more telemetry cores. Each Processing RAM may be connected to a processing core or shared by one or more processing cores.

MISC 110, memory 112, telemetry core(s) 104, processing core(s) 106, and telemetry agents 108a-c may be connected together via an interconnector. For instance, as illustrated in Fig. 1, MISC 110, memory 112, telemetry core(s) 104, processing core(s) 106, and telemetry agents 108a-c are connected to SoC interconnect 120 that may route transactions between the components. The SoC interconnect 120 may carry telemetry data provided by telemetry agents 108a-c to telemetry cores 104. In some examples, telemetry agents 108a-c may send the telemetry data directly to memory 112. In some other examples, telemetry agents 108a-c may send the telemetry data in a pre-processed format directly to TC RAM 114.

The telemetry subsystem may receive telemetry data from MISC 110, memory 112, processing cores 106, etc. For instance, telemetry agents 108c may monitor or otherwise receive non-core telemetry data from MISC 110 and pass the received non-core telemetry data to the telemetry cores 104 via SoC interconnect 120. In this regard, the telemetry agent108 may query the MISC 110 for telemetry data and send received telemetry data to the telemetry subsystem. In another example, the telemetry cores 104 may receive core telemetry data from the processing cores 106 through telemetry agent 108a. The core and non-core telemetry data may be stored by the telemetry cores 104 in on-die memory, such as TC RAM 114. In some instances, the telemetry cores 104 may store the telemetry data off-die, such as in memory 112.

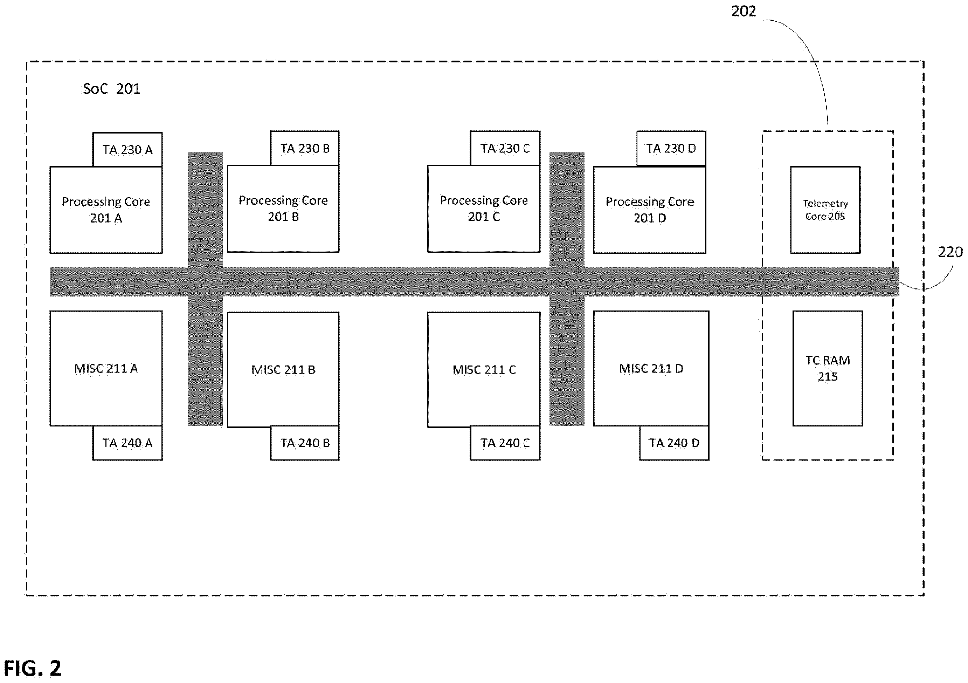

Figure 2 is an illustration of an example interconnection system of SoC 201, which may be compared to SoC 101. As shown, the components of SoC 201 include TC RAM 215, MISC 211A-D, processing cores 201A-D, and telemetry core 205 on SoC 201. Interconnect 220, which may be compared to SoC interconnect 120 as illustrated in FIG. 1, may facilitate communications between processing cores 201A-D and MISC 211A-D with telemetry core 205 and TC RAM 215. Although Fig. 2 illustrates an interconnection system shared between the processing cores and the telemetry subsystem, the telemetry subsystem may be implemented using a separate telemetry interconnect, which may decouple telemetry data transfer from the rest of the system.

In some examples, one or more processing cores 201A-D may be converted to telemetry cores. For example, a processor core, such as processing core 201A may be converted to a telemetry core to assist telemetry core 205 in handling telemetry data provided by the telemetry agents. Telemetry agents 230 A-D may be attached to each processing core 201A-D. Telemetry agent 240A-D may be attached to each MISC 211A-D. Telemetry subsystem 202 may comprise telemetry core 205, TC RAM 215, and telemetry agents 240 A-D. For clarity, only the telemetry core 205 and TC RAM 215 are shown as being within the dashed-box representing telemetry subsystem 202.

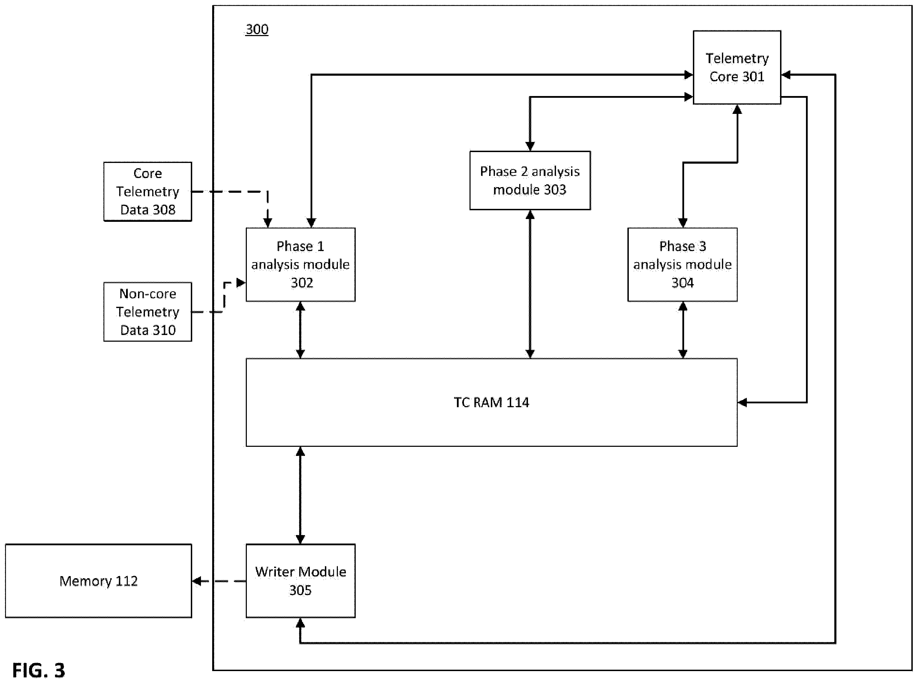

Figure 3 depicts an architecture of a telemetry subsystem. As shown, the telemetry subsystem architecture may include telemetry core 301, phase 1 analysis module 302, phase 2 analysis module 303, phase 3 analysis module 304, TC RAM 114, and writer module 305. The phase 1-3 analysis modules 302-304 and writer module 305 may be hardware or software components controlled by telemetry core 301. As shown, telemetry subsystem 300 may receive core telemetry data 308 and non-core telemetry data 310 from telemetry agents. In some instances, the telemetry data, including the core and non-core telemetry data, may be provided directly to the telemetry cores without the use of a telemetry agent.

Core 301 may control the operation of phase 1 analysis module 302, phase 2 analysis module 303, phase 3 analysis module 304, and write module 305, as described herein.

Phase 1 analysis module 302 may process core telemetry data 308 and non-core telemetry data 310 using histogram accelerators or store core telemetry data 308 and non-core telemetry data 310 as raw data in TC RAM 114. In this regard, phase 1 analysis module 302 may contain histogram accelerators that may read the telemetry data, which may be transmitted in data packets, and group the telemetry data into bins according to the telemetry data's partition identifier and event identifier.

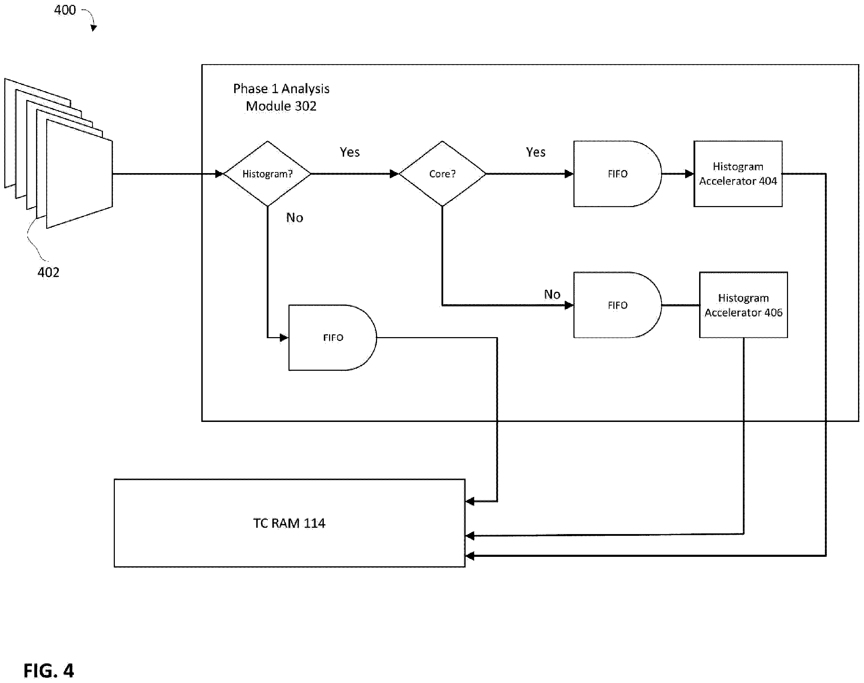

Figure 4 depicts an example phase 1 analysis module using histogram accelerators. As illustrated, the phase 1 analysis module 302 may include one or more histogram accelerators and FIFOs. In operation, the phase 1 analysis module 302 may determine if the incoming data received from the telemetry agent(s) 402 (or from a processing core) should be aggregated into histograms by the phase 1 analysis module 302 or not. If the data should not be aggregated into a histogram, the data will be dropped to TC RAM 114 via a FIFO and potentially sub-sampled. Otherwise, phase 1 analysis module 302 may determine whether the data is core telemetry data or non-core telemetry data. Histogram accelerator 404 may process the core telemetry data and histogram accelerator 406 may process non-core telemetry data. Processing cores may change the number of bins generated by histogram accelerator 404 and histogram accelerator 406 independently of each other. Processing cores can also change the interval of data sent by telemetry sources independently for each telemetry source. The histogram data may be sent to TC RAM 114.

Referring again to Fig. 3, the phase 2 analysis module 303 retrieves the histogram data to perform post-processing of the generated histograms. In this regard, the phase 2 analysis module 303 can calculate the distribution and/or other relevant statistical figures associated with each histogram stored in TC RAM 114. These statistical figures are then stored in TC RAM 114.

The phase 3 analysis module 304 may retrieve the statistical data and/or histograms, and further analyze the data. Example analysis may be anomaly/phase detection where anomalies may include any type of inconsistency in the pattern of the data from the rest of the data or excessive redundancy in the same data, etc. Such anomalies, and data related to the anomalies, may be sent by telemetry core 301 to TC RAM 114. Further, telemetry core 104 (as shown in Fig 1) may retrieve the data related to the anomalies for further analysis and corrective measurements.

Writer module 305 may retrieve any data stored in TC RAM 114 to store in SoC memory 112 (as shown in FIG. 1) for processing by and/or review by processing cores 106 (as shown in FIG. 1.) Referring again to FIG.1, telemetry core 104 may utilize writer module 305 to store the data in memory 112 via SoC interconnect 120. Although writer module 305 may be hardware or software components controlled by telemetry core 301, writer module 305 may also be logically implemented inside telemetry core 104.

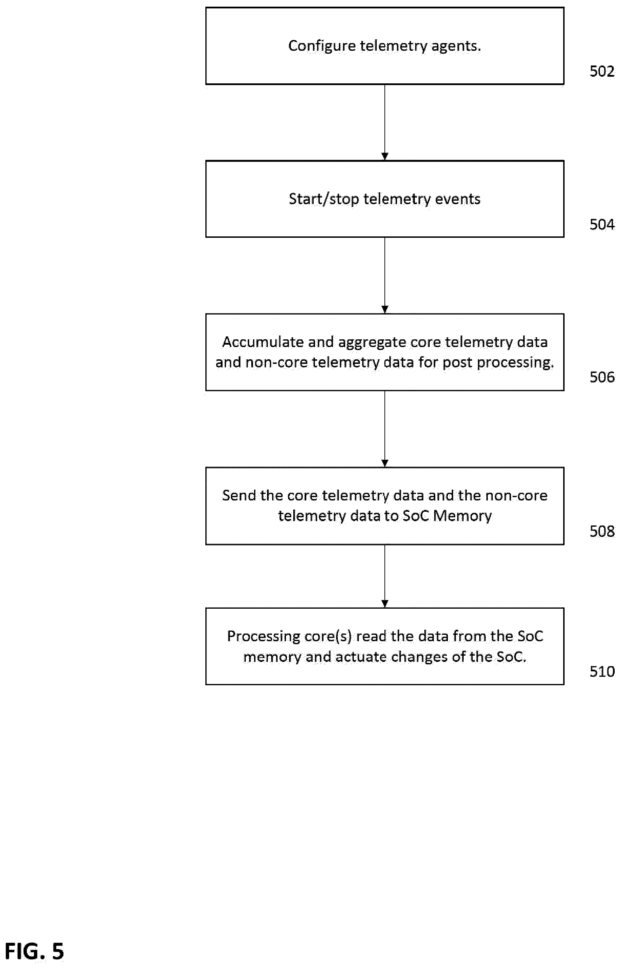

Figure 5 depicts a flow diagram illustrating a method for processing telemetry data using a telemetry subsystem. According to block 502, telemetry agents may be configured to monitor and collect telemetry data from various components of an SoC. For example, the telemetry agents may be configured by dedicated telemetry cores to monitor and collect information from various components of the SoC such as processing cores 106, memory 112, and MISC 110 as illustrated in FIG.1. The telemetry agents may monitor and collect telemetry data from various components included in MISC 110 such as I/O interfaces, memory controllers, current and voltage sensors, etc.

According to block 504, the telemetry agents may start or stop collecting telemetry data. Telemetry cores may determine when to start or stop collecting the telemetry data based on a predetermined threshold data volume or predetermined data collection frequency. For example, the telemetry cores may configure the telemetry agent to stop collecting the telemetry data when the volume of the incoming data exceeds the volume of the data that the telemetry cores can process in a given time. The data collection frequency may be adjusted in accordance with the volume of the incoming telemetry data and the processing rate of the telemetry cores. Telemetry cores may filter the collected telemetry data to reduce the volume of the data obtained by the telemetry agents. In some examples, the telemetry cores may stop the telemetry agents when anomalies in the telemetry data, such as inconsistency in the pattern of the telemetry data or excessive redundancy in the same data are discovered.

According to block 506, core telemetry data and non-core telemetry data may be accumulated and aggregated for post-processing. In this regard, the telemetry agents may collect both core telemetry data and non-core telemetry data and transmit the core and non-core telemetry data to the telemetry core to be accumulated and aggregated in histograms, as described herein with regard to the phase 1 analysis module 302. In addition to the histograms, the phase 1 analysis module 302 may also calculate statistical figures such as a sum of the values and a sum of square of the values (or average and standard deviation) The aggregated and accumulated data may be stored in the dedicated telemetry RAM. Any inconsistency in the distribution of the telemetry data or excessive amount of data falling into a particular bin of the histogram may be detected from the phase 1 output by the phase 2 analysis module 303.

According to block 508, the core telemetry data and the non-core telemetry data may be sent to the SoC memory, such as memory 112, as illustrated in FIG. 1. The telemetry core may retrieve the aggregated core telemetry data and non-core telemetry data from the dedicated telemetry RAM and transmit the retrieved data to the SoC memory. The core telemetry data and non-core telemetry data sent to the SoC memory at this stage may be post-processed data.

According to block 510, processing cores may read the data from the SoC memory and actuate changes in the SoC. The processing cores may retrieve the aggregated core telemetry data and non-core telemetry data from the SoC memory and determine if any change should be made to components of the SoC. If necessary, the processing cores may reconfigure the components to address any errors discovered. For example, if the processing cores determine from the telemetry data attached to a temperature sensor on an SoC that the temperature within the SoC is too high, the processing core may cause a fan connected to the SoC to operate to lower the temperature or place some components of the SoC in the idle mode until the temperature drops. In another example, if the processing cores determine from telemetry data that a specific process is responsible for memory traffic bursts impacting the performance of other processes in the SoC, the processing cores can impose policies to throttle such a process in hardware or software.

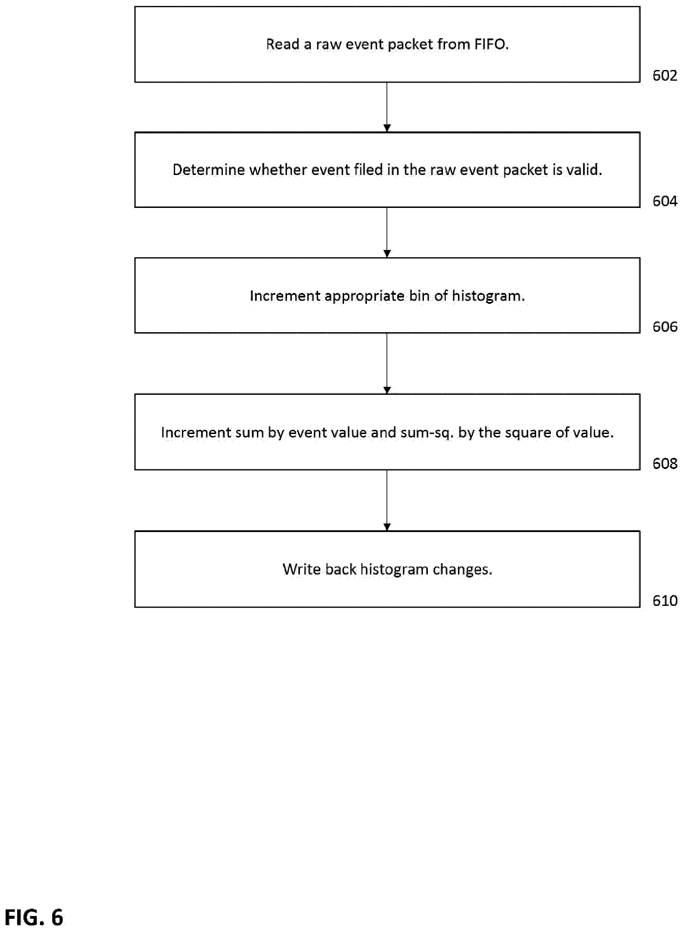

Figure 6 depicts a flow diagram illustrating a method for generating and changing a histogram. According to block 602, the histogram accelerators may read a raw event packet from a FIFO. Raw event packets may refer to unaggregated core telemetry data and non-core telemetry data. As illustrated in FIG.4, the unaggregated core telemetry data may be processed by histogram accelerator 404 and the non-core telemetry data may be processed by histogram accelerator 406.

According to block 604, the raw event packet may be analyzed to determine whether the event field in the raw event packet is valid. In this regard, each raw event packet may include an event field value or event identifier that represents unique identifiers of certain events where the telemetry data occurred. The telemetry cores may determine whether the incoming telemetry data within a raw event packet is valid by comparing the event identifier attached to the raw event packet against the preprogrammed valid event identifiers.

According to block 606, the appropriate bins of the histograms may be incremented. In this regard, after the incoming telemetry data is determined to be valid, the telemetry data may be grouped into one of the bins of the histograms and the counter of said one of the bins may be incremented. In some examples, threshold values may be used to compare against the telemetry data for selection of the right bin. Such threshold values may be preprogrammed or configurable.

According to block 608, the sum of the histograms may be incremented by the event value of each event and the sum square may be incremented by the square of the event value. In some examples, different events may have different identifiers. Each sample of the telemetry data may have a value for each of the events monitored and measured. Grouping the telemetry data into one or more bins may be a lossy process. Since calculating average and standard deviation for each sample may be computationally expensive, computing sum/sum square may be beneficial to maintain accuracy for the purpose of calculating a first and second moment (also referred to herein as average and standard deviation, respectively), accurately to better identify the distribution of the values. For example, a first bin has an interval of 0-100 and a second bin has an interval of 101-1000. When the input into the bins is 99 and 101, with 99 going into the first bin and 101 going into the second bin, the average is 100: (99 + 101) / 2 = 100. However, if only the bin data is available for calculation of the average, the average value for each bin may be used to calculate an average of the entire bins, which is 275: (50 + 500) / (1 + 1) = 275.

According to block 610, any changes made to the histograms may be written back to the SoC memory. Information related to the changes made in the above steps may be stored in the dedicated telemetry RAM first. The telemetry core may retrieve the saved information and store it in the SoC memory, such as memory 112 as shown in FIG. 3.

Further implementations are summarized in the following examples.

Example 1: A system on a chip, SoC, for telemetry collection, the SoC comprising: one or more processing cores; and a telemetry subsystem, comprising one or more telemetry cores, wherein the one or more telemetry cores are configured to process telemetry data generated by one or more telemetry sources.

Example 2: The SoC of example 1, wherein the telemetry subsystem includes a telemetry core random access memory, RAM, wherein the one or more telemetry cores are configured to store the telemetry data in the telemetry core RAM; and/or wherein the telemetry core RAM is connected to the one or more processing cores via a bus.

Example 3: The SoC of one of examples 1 or 2, wherein the telemetry data includes core telemetry data and non-core telemetry data.

Example 4: The SoC of example 3, further comprising one or more additional components, wherein the one or more additional components provide the core telemetry data or the non-core telemetry data; or wherein the telemetry subsystem further comprises one or more telemetry agents, wherein the one or more telemetry agents are attached to components of the SoC to monitor the components of the SoC for the telemetry data.

Example 5: The SoC of one of examples 1 to 4, wherein the telemetry subsystem comprises one or more analysis modules, wherein the one or more telemetry cores configure the one or more analysis modules to generate histograms based on the telemetry data, post-process the generated histograms, and detect anomalies from the post-processed histograms.

Example 6: The SoC of one of examples 1 to 5, wherein the telemetry subsystem comprises one or more histogram accelerators, wherein the one or more histogram accelerators process the core telemetry data and the non-core telemetry data.

Example 7: The SoC of example 6, wherein a first histogram accelerator of the one or more histogram accelerators processes the core telemetry data and a second histogram accelerator of the one or more histogram accelerators processes the non-core telemetry data.

Example 8: The SoC of example 7, wherein the first histogram accelerator is configured to group the core telemetry data into bins according to part identifiers and event identifiers within the core telemetry data; the second histogram accelerator is configured to group the non-core telemetry data into bins according to part identifiers and event identifiers within the non-core telemetry data; and wherein the telemetry data is optionally stored in memory.

Example 9: A method for telemetry collection, the method comprising: collecting, by one or more the telemetry agents, telemetry data from one or more device components; aggregating, by one or more telemetry cores, the collected telemetry data into a histogram; storing, by the one or more telemetry cores, the aggregated telemetry data in memory; and analyzing, by one or more processing cores, the aggregated telemetry data to determine operational changes for the device components.

Example 10: The method of example 9, wherein the collected telemetry data is stored in a telemetry core random access memory.

Example 11: The method of one of examples 9 or 10, wherein the one or more telemetry cores are connected to the one or more processing cores via a bus.

Example 12: The method of one of examples 9 to 11, wherein the telemetry data includes core telemetry data and non-core telemetry data.

Example 13: The method of one of examples 9 to 12, wherein the collected telemetry data is aggregated using one or more analysis modules, wherein the one or more analysis modules are configured to generate histograms based on the telemetry data, post-process the generated histograms, and detect anomalies from the post-processed histograms

Example 14: The method of example 12, wherein the core telemetry data and the non-core telemetry data is processed by one or more histogram accelerators; wherein, optionally, a first histogram accelerator of the one or more histogram accelerators processes the core telemetry data and a second histogram accelerator of the one or more histogram accelerators processes the non-core telemetry data.

Example 15: The method of one of examples 9 to 14, further comprising: configuring the one or more telemetry agents to connect to the one or more device components for monitoring and collecting telemetry data.

Although the technology herein has been described with reference to particular embodiments, it is to be understood that these embodiments are merely illustrative of the principles and applications of the present technology. It is therefore to be understood that numerous modifications may be made to the illustrative embodiments and that other arrangements may be devised without departing from the scope of the present technology as defined by the appended claims.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system on a chip, SoC, for telemetry collection, the SoC comprising:
one or more processing cores; and
a telemetry subsystem, comprising one or more telemetry cores,
wherein the one or more telemetry cores are configured to process telemetry data generated by one or more telemetry sources.

2. The SoC of one of claims 1, wherein the telemetry subsystem comprises one or more analysis modules, wherein the one or more telemetry cores configure the one or more analysis modules to generate histograms based on the telemetry data, post-process the generated histograms, and detect anomalies from the post-processed histograms.

3. The SoC of claim 1 or 2, wherein the telemetry subsystem comprises one or more histogram accelerators, wherein the one or more histogram accelerators process the core telemetry data and the non-core telemetry data.

4. The SoC of claim 3, wherein a first histogram accelerator of the one or more histogram accelerators processes the core telemetry data and a second histogram accelerator of the one or more histogram accelerators processes the non-core telemetry data.

5. The SoC of claim 4, wherein
the first histogram accelerator is configured to group the core telemetry data into bins according to part identifiers and event identifiers within the core telemetry data;
the second histogram accelerator is configured to group the non-core telemetry data into bins according to part identifiers and event identifiers within the non-core telemetry data; and wherein the telemetry data is optionally stored in memory.

6. A method for telemetry collection, the method comprising:
collecting, by one or more the telemetry agents, telemetry data from one or more device components;
aggregating, by one or more telemetry cores, the collected telemetry data into a histogram;
storing, by the one or more telemetry cores, the aggregated telemetry data in memory; and
analyzing, by one or more processing cores, the aggregated telemetry data to determine operational changes for the device components.

7. The method of claim 6, wherein the collected telemetry data is stored in a telemetry core random access memory.

8. The method of claim 6 or 7, wherein the one or more telemetry cores are connected to the one or more processing cores via a bus.

9. The method of one of claims 6 to 8, wherein the telemetry data includes core telemetry data and non-core telemetry data.

10. The method of one of claims 6 to 9, wherein the collected telemetry data is aggregated using one or more analysis modules, wherein the one or more analysis modules are configured to generate histograms based on the telemetry data, post-process the generated histograms, and detect anomalies from the post-processed histograms

11. The method of claim 9, wherein the core telemetry data and the non-core telemetry data is processed by one or more histogram accelerators;
wherein, optionally, a first histogram accelerator of the one or more histogram accelerators processes the core telemetry data and a second histogram accelerator of the one or more histogram accelerators processes the non-core telemetry data.

12. The method of one of claims 6 to 11, further comprising:
configuring the one or more telemetry agents to connect to the one or more device components for monitoring and collecting telemetry data.
